# FASCICULE DE BREVET EUROPEEN

(11) **EP 3 362 413 B1**
(45) Date de publication et mention de la délivrance du brevet: **07.02.2024**
(21) Numéro de dépôt: 16794697.9
(22) Date de dépôt: 11.10.2016
(51) Int. Cl.: C02F 11/00, C02F 11/12

(54) **DISPOSITIF DE DESHYDRATATION DE BOUES**
VORRICHTUNG ZUR ENTWÄSSERUNG VON SCHLÄMMEN
DEVICE FOR DEHYDRATION OF SLUDGES

(30) Priorité: 12.10.2015 FR 1559675
(43) Date de publication de la demande: 22.08.2018
(73) Titulaire: Veolia Water Solutions & Technologies Support, 94410 Saint-Maurice (FR)
(72) Inventeur: MAILLET, Laetitia, 93100 Montreuil (FR); HERBRETEAU, Benjamin, 78520 Saint-Martin-La-Garenne (FR); GEORGEAUD, Vincent, 78570 Andresy (FR)
(74) Mandataire: Cabinet Beau de Loménie
(86) Numéro de dépôt international: PCT/FR2016/052626
(87) Numéro de publication internationale: WO 2017/064412

(56) Documents cités:
- EP-A2- 0 384 081
- WO-A1-03/068691
- WO-A1-2010/067340
- WO-A1-2016/135422
- CN-A- 101 823 820
- JP-A- S60 114 315
- US-A1- 2004 144 735

## Description

### DOMAINE DE L'INVENTION

Le présent exposé concerne un dispositif de déshydratation de boues permettant d'atteindre un niveau élevé de siccité tout en conservant une consommation énergétique et des risques industriels limités.

Un tel dispositif peut notamment être utilisé pour déshydrater des boues, celles issues de stations d'épuration par exemple, en vue de leur incinération ou de leur enfouissement.

### ETAT DE LA TECHNIQUE ANTERIEURE

Les boues, comme celles issues de stations d'épuration par exemple, font généralement l'objet d'une déshydratation suivie d'une valorisation, comme amendement organique (épandage) ou par combustion (incinération), ou d'un enfouissement en centre de stockage. Dans le cas de la combustion, la siccité de la boue atteinte au terme de l'étape de déshydratation, c'est-à-dire le ratio de matière sèche par rapport à la masse totale de boue, doit être suffisante pour permettre l'auto-entretien de la combustion : une siccité de 30 à 45% est ainsi préférée. De même, dans le cas de l'enfouissement, certaines législations nationales requièrent un taux de siccité minimal avant enfouissement des boues, de l'ordre de 40% par exemple. On comprend donc l'importance de développer des procédés et des dispositifs de déshydratation efficaces, en particulier lorsque la boue est d'un type difficile à déshydrater comme cela est notamment le cas des boues biologiques en station d'épuration.

Parmi les procédés connus, certains visent à déshydrater mécaniquement la boue : il peut s'agir de procédés de centrifugation ou de filtration sous pression, avec notamment l'utilisation d'un filtre-presse ou d'un filtre à bande. Toutefois, de tels procédés sont limités. Par exemple, pour des boues de station d'épuration, ils permettent d'atteindre des siccités de seulement 15 à 40% ; cette valeur maximale de 40% n'étant atteinte que dans de rares cas avec des dispositifs particulièrement efficaces et des boues particulièrement faciles à traiter (à dominante minérale par exemple). Ainsi, pour certaines boues, telles les boues biologiques de station d'épuration, il est difficile d'atteindre une siccité de 30%, ce qui peut être insuffisant selon le devenir de ces boues.

D'autres procédés visent à déshydrater thermiquement les boues : il s'agit alors de chauffer ces dernières en vue de les sécher. Ces procédés sont très efficaces : en fonction de la température de chauffage et de la durée du traitement, il est possible d'atteindre des siccités de l'ordre de 90%. Toutefois, ces procédés sont très énergivores et consomment a minima 700 kWh par tonne d'eau éliminée (kWh/tEE), voire plus encore, lorsqu'un procédé mécanique consomme en général moins de 20 kWh/tEE selon le type de technologie (filtre-presse, filtre à bande ou centrifugeuse).

Enfin, des procédés de déshydratation mécanique assistée électriquement, appelés procédés d'électro-déshydratation, visent à filtrer sous pression un volume de boue, par exemple dans un filtre-presse, en appliquant en outre un champ électrique.

EP0 384 081 A2 et CN101823820A décrivent des exemples de cette technologie pour la déshydratation des boues. Celui-ci, ajouté au phénomène d'hydrolyse qu'il crée, permet de rompre les liaisons eau-boue, facilitant la migration des molécules d'eau en sens inverse des particules solides. Une telle assistance électrique permet donc d'améliorer la déshydratation des boues et ainsi de gagner quelques points de siccité supplémentaires. Toutefois, un tel procédé se retrouve confronté à certaines difficultés dans le cas de certaines boues.

En effet, pendant l'électro-déshydratation, la boue se comporte comme une résistance électrique. Or, dans le cas de certaines boues pour lesquelles l'électromobilité et/ou la quantité d'ions est faible, on constate une élévation rapide de la résistance électrique de la boue. Dès lors, par effet Joule et à intensité constante, l'élévation rapide de la résistance électrique de la boue se traduit par une augmentation de la température. Plus la boue est sèche, plus l'électromobilité est faible et donc plus la résistance électrique est élevée. Ceci entraîne dans le même temps une augmentation de la température, en particulier du côté de l'anode qui est la zone la plus sèche au moment de l'électro-déshydratation. Pour cette raison, la durée de telles électro-déshydrations est nécessairement limitée dans le temps afin de ne pas endommager le dispositif d'électro-déshydratation.

En outre, les réactions d'hydrolyse de l'eau survenant dans la boue sous l'effet du champ électrique appliqué sont responsables de la production de dihydrogène gazeux H₂ à la cathode ainsi que de dioxygène gazeux O₂ à l'anode. Dès lors, la présence simultanée de ces deux gaz dans le dispositif d'électro-déshydratation peut conduire à la formation d'une atmosphère explosive. De plus, en fonction de la nature de la boue à déshydrater, on constate également la survenance d'autres réactions d'électrolyse pouvant conduire à la formation de gaz dangereux, toxiques, explosifs ou corrosifs par exemple, et notamment de dichlore Cl₂ lorsque la boue contient des chlorures. Pour évacuer ces différents gaz dangereux, que ce soit pour le matériel ou pour les opérateurs, les dispositifs d'électro-déshydratation sont généralement munis d'orifices d'échappement. Toutefois, il a été constaté que ces derniers ne suffisaient pas toujours à évacuer correctement ces différents gaz, des poches de gaz dangereux pouvant subsister dans la boue à déshydrater.

Enfin, certaines réactions aux électrodes peuvent entraîner également une modification du pH du filtrat : ainsi, une acidification est généralement constatée à l'anode tandis qu'une basification se produit à la cathode, nécessitant alors d'analyser le pH du filtrat et de réaliser une éventuelle étape supplémentaire de neutralisation de celui-ci avant rejet dans le milieu.

Il existe donc un réel besoin pour un dispositif de déshydratation de boues qui soit dépourvu, au moins en partie, des inconvénients inhérents aux dispositifs connus précités.

### PRESENTATION DE L'INVENTION

Le présent exposé concerne un dispositif de déshydratation de boues, comprenant au moins un premier plateau muni d'une première électrode, et au moins un deuxième plateau muni d'une deuxième électrode, dans lequel les premier et deuxième plateaux définissent une chambre configurée pour recevoir une boue à déshydrater, dans lequel les première et deuxième électrodes sont configurées pour mettre en place un champ électrique au sein de la chambre, dans lequel la chambre est munie d'au moins un orifice d'évacuation, prévu dans le tiers inférieur de la chambre, configuré pour évacuer un filtrat, et dans lequel la chambre est munie d'au moins un orifice d'injection, prévu dans le tiers supérieur de la chambre, configuré pour injecter dans la chambre un fluide de purge sous pression.

Dans le présent exposé, un fluide est considéré comme « sous pression » lorsque sa pression d'alimentation dans la chambre est supérieure à la pression de sortie des filtrats.

Ainsi, grâce à la configuration de l'invention définie par la revendication 1, il est possible de refouler le filtrat ainsi que les éventuels gaz produits vers le bas de la chambre et donc vers les orifices d'évacuation : on facilite donc l'évacuation de ces derniers et on réduit ainsi les risques d'accumulation de gaz dangereux dans la chambre. La durabilité du dispositif est ainsi préservée et la dangerosité de l'environnement de travail est réduite pour les opérateurs.

De plus, le fluide de purge peut également jouer un rôle de fluide de refroidissement permettant de refroidir les électrodes et donc de prolonger le procédé d'électro-déshydratation, ce qui permet d'atteindre des niveaux de siccité plus importants.

Le fluide de purge peut également faire office de vecteur pour introduire dans la chambre certaines espèces chimiques visant à corriger certains paramètres du milieu, son pH par exemple, ou encore sa résistance électrique.

Ce dispositif est dès lors particulièrement efficace dans le cadre d'un procédé d'électro-déshydratation, tel celui décrit par exemple dans la demande de brevet français n° 15 51636.

Dans le mode de réalisation de l'invention, au moins un plateau est muni d'un média filtrant. Un tel filtre permet de retenir la matière solide de la boue et de laisser passer l'eau extraite de la boue. De préférence, chaque plateau est muni d'un média filtrant. Il peut notamment s'agir d'une toile filtrante.

Dans certains modes de réalisation, au moins un plateau est muni d'au moins une membrane configurée pour être déformée par un fluide de compression, notamment de l'air comprimé. Une telle membrane permet de réduire le volume de la chambre et donc de comprimer la boue présente dans la chambre afin d'extraire mécaniquement une partie de l'eau contenue dans la boue. Chaque plateau peut être muni d'une telle membrane mais de préférence un seul plateau par chambre en est équipé, de préférence le plateau équipé de la cathode.

Dans certains modes de réalisation, le dispositif comprend un surpresseur configuré pour alimenter la membrane avec de l'air comprimé.

Dans certains modes de réalisation, le dispositif comprend une alimentation électrique, par exemple un générateur électrique, un redresseur ou une batterie, configurée pour alimenter les première et deuxième électrodes.

Dans certains modes de réalisation, le dispositif comprend un vérin hydraulique configuré pour maintenir les premier et deuxième plateaux l'un contre l'autre et assurer ainsi l'étanchéité de la chambre.

Dans certains modes de réalisation, le dispositif comprend une pluralité de premiers plateaux et une pluralité de deuxièmes plateaux.

Dans certains modes de réalisation, chaque plateau est muni d'au moins un orifice d'évacuation. Ceci permet d'une part d'évacuer plus facilement le filtrat, un orifice d'évacuation étant prévu de chaque côté de la chambre. D'autre part, ceci permet d'évacuer de manière séparée les gaz produits à chaque électrode, typiquement le dihydrogène d'un côté et le dioxygène de l'autre, afin d'éviter la formation d'un possible mélange explosif.

Dans certains modes de réalisation, chaque plateau est muni d'au moins un orifice d'injection. Ceci permet de pousser de manière plus efficace les gaz produits à chaque électrode. En outre, ceci permet d'injecter éventuellement des fluides de purge différents au niveau de chaque électrode.

Dans certains modes de réalisation, ledit au moins un orifice d'évacuation du premier plateau et ledit au moins un orifice d'évacuation du deuxième plateau sont connectés à des canaux d'évacuation différents.

Dans certains modes de réalisation, ledit au moins un orifice d'injection du premier plateau et ledit au moins un orifice d'injection du deuxième plateau sont connectés à des canaux d'injection différents.

Dans certains modes de réalisation, ledit au moins un orifice d'injection du premier plateau et ledit au moins un orifice d'injection du deuxième plateau sont configurés pour injecter dans la chambre deux fluides de purge différents. On peut ainsi choisir un fluide de purge particulier pour chaque électrode en fonction des particularités de cette dernière ainsi que des réactions chimiques observées à son contact.

Dans certains modes de réalisation, le dispositif comprend une alimentation en un premier fluide de purge.

Dans certains modes de réalisation, le dispositif, comprend une alimentation en un deuxième fluide de purge, distinct du premier fluide de purge.

Dans certains modes de réalisation, un fluide de purge est un gaz ou un mélange de gaz inerte(s) et/ou non toxique(s), non inflammable(s) et non susceptible(s) de créer une zone explosive en présence de H₂ ou de O₂.

Dans le présent exposé, on considère qu'un gaz est non toxique, ou non inflammable ou non susceptible de créer une zone explosive lorsqu'il ne présente pas ces propriétés aux conditions de concentrations, pression et température dans lesquelles il se trouve au sein de la chambre.

Dans certains modes de réalisation, un fluide de purge est choisi parmi les gaz suivants : N₂, He, Ar, CO₂, air ou un mélange de ces derniers.

Dans certains modes de réalisation, un fluide de purge est humidifié. Ceci permet d'une part d'améliorer le refroidissement des électrodes, et d'autre part de remédier à l'asséchement prématuré de l'anode, responsable habituellement d'un accroissement rapide de température. Il est ainsi possible de prolonger le procédé d'électro-déshydratation et donc d'atteindre des niveaux de siccité plus importants.

Dans certains modes de réalisation, la teneur en humidité du fluide de purge est comprise entre 0 et 600 g de vapeur d'eau par kg de gaz sec, de préférence comprise entre 10 et 300 g vapeur d'eau/ kg gaz sec.

Dans certains modes de réalisation, un fluide de purge comprend au moins un électrolyte. Ceci permet d'apporter des électrolytes au sein du milieu de manière à obtenir une meilleure répartition de la densité de courant au sein de la boue et donc de réduire l'apparition d'une zone à plus forte résistance électrique s'asséchant plus rapidement. Il est ainsi possible de prolonger le procédé d'électro-déshydratation et donc d'atteindre des niveaux de siccité plus importants. En outre, on réduit le risque d'une dégradation prématurée des électrodes en évitant d'atteindre la tension de claquage du matériau qui les constitue.

Dans certains modes de réalisation, au moins un électrolyte est choisi parmi les espèces suivantes : NaCl, KCl, Na₂SO₄ ou K₂SO₄.

Dans certains modes de réalisation, un fluide de purge comprend au moins un électrolyte comprenant un composé contenant l'élément chlore, par exemple un chlorure. Ceci favorise la formation de dichlore aqueux Cl_{2(aq)} au sein du milieu : ce dernier offre alors une action désinfectante sur le gâteau de boue obtenu. On peut par exemple utiliser du NaCl ou du KCl.

Dans certains modes de réalisation, un fluide de purge est dépourvu de sulfate. Ceci permet de réduire le risque d'une précipitation de tartre de sulfate et donc l'apparition d'un dépôt de tartre sur les électrodes entraînant une résistance électrique supplémentaire. Une telle précaution est particulièrement préférable du côté de la cathode.

Dans certains modes de réalisation, un fluide de purge comprend au moins un acide. Ceci permet de compenser une basification éventuelle du milieu survenant naturellement au cours de l'électro-déshydratation, en particulier à la cathode. On peut par exemple utiliser de l'HCl.

Dans certains modes de réalisation, un fluide de purge comprend au moins une base. Ceci permet de compenser une acidification éventuelle du milieu survenant naturellement au cours de l'électro-déshydratation, en particulier à l'anode. On peut par exemple utiliser du NaOH.

Dans certains modes de réalisation, un fluide de purge est injecté à une pression supérieure d'au moins 50 mbar par rapport à la pression de sortie du filtrat, et de préférence supérieure d'au moins 200 mbar par rapport à la pression de sortie du filtrat. Ceci permet de refouler plus efficacement les gaz produits vers les orifices d'évacuation.

Dans certains modes de réalisation, un fluide de purge est injecté à une température inférieure à 50 °C, de préférence inférieure à 30 °C. Ceci permet de refroidir plus efficacement les électrodes.

Dans certains modes de réalisation, ledit au moins un orifice d'évacuation est prévu à l'extrémité inférieure de la chambre de filtration.

Dans certains modes de réalisation, ledit au moins un orifice d'injection est prévu à l'extrémité supérieure de la chambre de filtration.

Dans certains modes de réalisation, le dispositif comprend au moins un clapet ou un dispositif anti-retour prévu au niveau ou en amont dudit au moins un orifice d'injection. Ceci permet d'éviter que du fluide de purge ou un gaz produit lors de l'électro-déshydratation ne reflue par l'orifice d'injection.

Dans certains modes de réalisation, le dispositif comprend au moins un séparateur liquide/gaz prévu en aval dudit au moins un orifice d'évacuation. Ceci permet de récupérer le filtrat liquide d'une part et les gaz produits d'autre part afin de les recycler ou de les valoriser par exemple.

Dans certains modes de réalisation, le dispositif comprend un dispositif de réinjection configuré pour réinjecter dans la chambre au moins une partie d'au moins un filtrat en tant qu'électrolyte. Ceci permet de recycler une partie des électrolytes injectés.

Dans certains modes de réalisation, la boue à déshydrater est une boue biologique issue d'une station d'épuration. Ce type de boue contient spécifiquement une forte proportion d'eau liée. Toutefois, naturellement, le présent exposé pourrait être appliqué à d'autres types de boues, notamment à des boues industrielles.

Les caractéristiques et avantages précités, ainsi que d'autres, apparaîtront à la lecture de la description détaillée qui suit, d'exemples de réalisation du dispositif proposé. Cette description détaillée fait référence aux dessins annexés.

### BREVE DESCRIPTION DES DESSINS

Les dessins annexés sont schématiques et visent avant tout à illustrer les principes de l'invention.

Sur ces dessins, d'une figure (FIG) à l'autre, des éléments (ou parties d'élément) identiques sont repérés par les mêmes signes de référence.
La FIG 1 est un schéma d'ensemble d'un exemple de dispositif selon l'invention.
La FIG 2 est un schéma d'un module du filtre-presse de cet exemple de dispositif.
La FIG 3 est une vue en perspective d'un plateau de ce filtre-presse.

### DESCRIPTION DETAILLEE D'EXEMPLE(S) DE REALISATION

Afin de rendre plus concrète l'invention, un exemple de dispositif de déshydratation est décrit en détail ci-après, en référence aux dessins annexés. Il est rappelé que l'invention ne se limite pas à cet exemple.

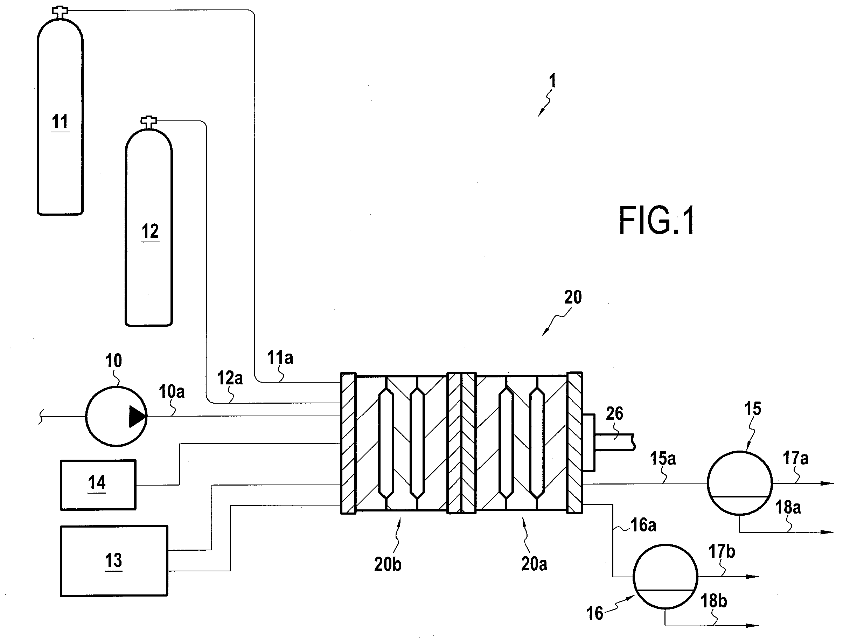

La FIG 1 illustre un exemple de dispositif de déshydratation 1 selon l'invention. Ce dispositif 1 comprend un filtre-presse 20, une pompe de gavage 10, une alimentation en un premier fluide de purge 11, une alimentation en un deuxième fluide de purge 12, un redresseur électrique 13, un surpresseur 14, un premier séparateur liquide/gaz 15 et un deuxième séparateur liquide/gaz 16.

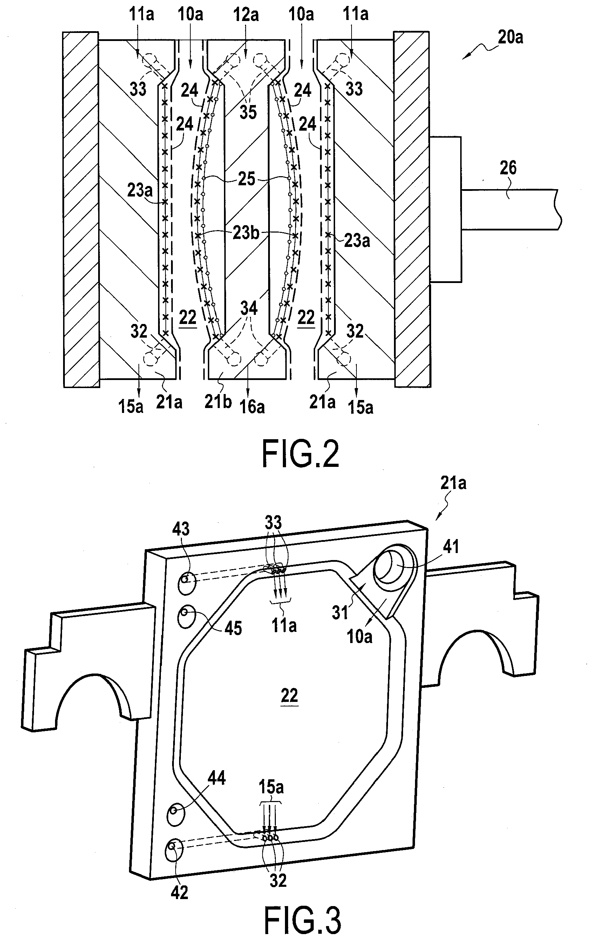

Le filtre-presse 20 comprend une pluralité de modules 20a, 20b composés de plateaux 21a, 21b plaqués les uns contre les autres par un vérin hydraulique 26 de manière à assurer l'étanchéité entre les différents plateaux 21a, 21b. Comme cela est visible sur les FIG 1 et 2, chaque plateau 21a, 21b s'étend verticalement.

Un module 20a est schématisé à la FIG 2. Il comprend trois plateaux 21a, 21b définissant deux chambres 22 dans lesquelles la boue à déshydrater 10a est introduite. Chaque paroi des plateaux 21a, 21b, définissant un bord d'une chambre 22, est munie d'une électrode 23a, 23b prenant de préférence la forme d'une grille : les plateaux latéraux 21a sont ainsi munis d'une électrode formant l'anode 23a et le plateau central 21b est muni sur chacune de ses faces d'une électrode formant la cathode 23b.

La paroi interne de chaque plateau 21a, 21b est munie d'une toile filtrante 24 disposée devant l'électrode 23a, 23b considérée. Chaque paroi du plateau central 21b est en outre munie d'une membrane 25 disposée derrière l'électrode 23b considérée.

Chaque plateau latéral 21a, également représenté à la FIG 3, est équipé d'un passage d'alimentation 31 en boue 10a relié à un tronçon de premier conduit 41 traversant complètement le plateau 21a à la périphérie de la chambre 22. Chaque plateau central 21b possède également un passage d'alimentation en boue relié à un tronçon de premier conduit traversant complètement le plateau 21b à la périphérie de la chambre 22. Tous les tronçons de premier conduit 41 sont alignés de sorte à former, lorsque les plateaux 21a, 21b sont plaqués les uns contre les autres, un premier conduit, étanche, formant un canal d'alimentation, connecté à la pompe de gavage 10 de sorte à alimenter le filtre-presse 20 en boue 10a.

Chaque plateau latéral 21a est également équipé, à l'extrémité inférieure de la chambre 22, d'une pluralité d'orifice d'évacuation 32, reliés à un tronçon de deuxième conduit 42, permettant d'évacuer les filtrats 15a côté anode, et, à l'extrémité supérieure de la chambre 22, d'une pluralité d'orifice d'injection 33, reliés à un tronçon de troisième conduit 43, permettant d'injecter un premier fluide de purge 11a côté anode.

De manière analogue, chaque plateau central 21b est également équipé, à l'extrémité inférieure de la chambre 22, d'une pluralité d'orifice d'évacuation 34, reliés à un tronçon de quatrième conduit 44, permettant d'évacuer les filtrats 16a côté cathode, et, à l'extrémité supérieure de la chambre 22, d'une pluralité d'orifice d'injection 35, reliés à un tronçon de cinquième conduit 45, permettant d'injecter un deuxième fluide de purge 12a côté cathode.

De plus, chaque plateau latéral 21a est muni d'un tronçon de quatrième conduit 44 non connecté à la chambre 22 mais aligné avec les tronçons de quatrième conduit 44 des autres plateaux de sorte à former, lorsque les plateaux 21a, 21b sont plaqués les uns contre les autres, un quatrième conduit, étanche, formant un canal d'évacuation, permettant d'évacuer les filtrats 16a récoltés côté cathode par les différents plateaux centraux 21b et connecté à l'entrée du deuxième séparateur liquide/gaz 16.

De même, chaque plateau latéral 21a est muni d'un tronçon de cinquième conduit 45 non connecté à la chambre 22 mais aligné avec les tronçons de cinquième conduit 45 des autres plateaux 21a, 21b de sorte à former, lorsque les plateaux 21a, 21b sont plaqués les uns contre les autres, un cinquième conduit, étanche, formant un canal d'alimentation, connecté à l'alimentation en deuxième fluide de purge 12 de sorte à alimenter le filtre-presse 20 côté cathode en deuxième fluide de purge 12a.

De manière analogue, chaque plateau central 21b est muni d'un tronçon de deuxième conduit et d'un tronçon de troisième conduit de manière à former avec ses voisins un deuxième conduit, formant un canal d'évacuation, permettant d'évacuer les filtrats 15a récoltés côté anode par les différents plateaux latéraux 21a et connecté à l'entrée du premier séparateur liquide/gaz 15 et, respectivement, un troisième conduit, formant un canal d'injection, connecté à l'alimentation en premier fluide de purge 11 de sorte à alimenter le filtre-presse 20 côté anode en premier fluide de purge 11a.

De plus, des tronçons de sixième conduit 46 sont prévus de manière analogue dans les plateaux 21a et 21b de manière à injecter dans les membranes 25 de l'air comprimé issu du surpresseur 14.

Le fonctionnement du dispositif de déshydratation va maintenant être décrit en détail.

Dans le cadre du présent exemple, la boue à traiter 10a est une boue biologique issue d'une station d'épuration. Ce type de boue est issu d'un bioréacteur à membrane fonctionnant directement sur de l'eau brute dégrillée.

La boue 10a, dont la siccité initiale est d'environ 0,9% dans cet exemple, c'est-à-dire 9 g/L, est admise dans le dispositif 1 à l'aide de la pompe de gavage 10 et alimentée dans les chambres de filtration 22 du filtre-presse 20 via le canal d'alimentation 41 et les passages d'alimentation 31. Cette boue 10a peut avoir subi une étape de conditionnement chimique préalable au cours de laquelle certains composants chimiques sont ajoutés à la boue 10a afin de faciliter son traitement et sa déshydratation : ainsi, dans cet exemple, sont ajoutés un adjuvant de coagulation, tel du FeCl₃, et un adjuvant de floculation, tel le polymère Flopam EM 640 TBD.

Puis, au cours d'une étape de filtration, la pompe de gavage 10 génère une pression mécanique de 8 bar au sein de la boue 10a qui est alors filtrée à l'aide des toiles filtrantes 24. Cette étape s'arrête lorsque le débit de filtrat 15a, 16a évacué par les plateaux 21a, 21b atteint un seuil bas prédéterminé. Cette étape permet d'éliminer l'eau libre présente en surface des flocs de boue à moindre dépense énergétique.

Une fois la boue 10a filtrée dans les chambres 22 du filtre-presse 20, une étape de compression seule est réalisée au sein du filtre-presse 20. Le surpresseur d'air comprimé 14 permet ainsi de gonfler les membranes 25 du filtre-presse 20 de manière à comprimer la boue 10a présente dans les chambres 22 jusqu'à atteindre une pression dans les membranes 25 du plateau 21b d'environ 11 à 12 bar.

Cette étape de compression seule permet d'extraire une première partie de l'eau interstitielle présente dans la boue 10a sous la forme de filtrats 15a, 16a évacués par les orifices d'évacuation 32, 34 des plateaux 21a, 21b.

Au terme de cette étape de compression seule, la compression est maintenue et l'assistance électrique est déclenchée afin d'initier une étape d'électro-déshydratation.

Le redresseur électrique 13 impose alors un courant entre les paires d'électrodes 23a, 23b de chaque chambre 22. Initialement, la régulation est réalisée à courant constant. Dans cet exemple, une intensité d'environ 9A est choisie, soit environ 40 A/m².

Au cours de cette étape, l'eau extraite de la boue 10 est évacuée sous la forme de filtrats 15a, 16a par les orifices d'évacuation 32, 34 des plateaux 21a, 21b.

On injecte alors dans les chambres 22, du côté de l'anode 23a, le premier fluide de purge 11a depuis la première alimentation en fluide de purge 11 et via le canal d'injection 43 et les orifices d'injection 33. On injecte également dans les chambres 22, du côté de la cathode 23b, le deuxième fluide de purge 12a depuis la deuxième alimentation en fluide de purge 12 et via le canal d'injection 45 et les orifices d'injection 35.

Dans cet exemple, le premier fluide de purge 11a est du diazote gazeux N₂ comprenant de l'eau, du Na₂SO₄ et du NaOH ; le deuxième fluide de purge 12a est quant à lui du diazote gazeux N₂ comprenant de l'eau, du NaCl et de l'HCl. Dans un tel exemple, les fluides de purge comprennent ainsi une phase gazeuse et une phase liquide, dispersée dans la phase gazeuse à la manière d'un brouillard, dans laquelle sont dissouts les électrolytes.

De plus, les premier et deuxième fluides de purge 11a et 12a sont injectés dans les chambres 22 à une pression absolue de 2 bar et à température ambiante.

Dès lors, les gaz générés au cours de cette étape d'électro-déshydratation, du dioxygène et du dihydrogène issus de l'hydrolyse de l'eau par exemple, sont refoulés par les fluides de purge 11a, 12a vers les orifices d'évacuation 32, 34 des plateaux 21a, 21b par lesquels ils sont alors évacués en même temps que les filtrats liquides. Plus précisément, les gaz générés aux anodes 23a sont refoulés vers les orifices d'évacuation 32 des plateaux 21a et donc évacués au sein des filtrats 15a via le canal d'évacuation 42 jusqu'au premier séparateur liquide/gaz 15. Les gaz générés aux cathodes 23b sont quant à eux refoulés vers les orifices d'évacuation 34 des plateaux 21b et donc évacués au sein des filtrats 16a via le canal d'évacuation 44 jusqu'au deuxième séparateur liquide/gaz 16.

Dans cet exemple, les fluides de purge 11a et 12a sont injecté en continu dans les chambres 22 durant toute l'étape d'électro-déshydratation. Toutefois, dans d'autres exemples, cette injection pourrait être réalisée en intermittence, de manière à purger complètement les chambres 22 à intervalle régulier.

Chaque séparateur 15, 16 sépare alors au sein des filtrats 15a, 16a la phase gazeuse 17a, 17b, contenant, selon le cas, le premier ou le deuxième fluide de purge en mélange avec les gaz produits au cours de l'électro-déshydratation, et la phase liquide 18a, 18b comprenant essentiellement de l'eau extraite de la boue 10a ainsi qu'une part des électrolytes injectés dans les chambres 22 et/ou produits aux électrodes 23a, 23b au cours de l'électro-déshydratation. Un dispositif de réinjection peut alors être prévu pour récupérer au moins une partie de ces électrolytes et les réintroduire dans les gaz de purge 11, 12 afin de les réinjecter dans les chambres 22.

La régulation à courant constant est maintenue jusqu'à ce que la température à proximité d'une anode 23a, mesurée à l'aide d'un thermocouple par exemple, atteigne une première valeur seuil : lorsque cette condition est remplie, la régulation du courant est abandonnée en faveur d'une régulation à tension constante.

L'assistance électrique à tension constante est ensuite maintenue jusqu'à ce que la température à proximité d'une anode 23a atteigne une deuxième température seuil : lorsque cette condition est remplie, le traitement électrique est arrêté et la compression des membranes 25 est relâchée.

Le vérin hydraulique 26 peut alors libérer les plateaux 21a, 21b du filtre-presse 20 de manière à pouvoir retirer les gâteaux de boue déshydratés des chambres 22 du filtre-presse 20.

Ces gâteaux peuvent ensuite être stockés, ou valorisés en amendement organique ou en énergie.

Les modes ou exemples de réalisation décrits dans le présent exposé sont donnés à titre illustratif et non limitatif, une personne du métier pouvant facilement, au vu de cet exposé, modifier ces modes ou exemples de réalisation, ou en envisager d'autres, tout en restant dans la portée de l'invention, qui est définie par la revendication 1.

De plus, les différentes caractéristiques de ces modes ou exemples de réalisation peuvent être utilisées seules ou être combinées entre elles.

## Revendications

1. Dispositif de déshydratation de boues, comprenant
au moins un premier plateau (21a) muni d'une première électrode (23a), et
au moins un deuxième plateau (21b) muni d'une deuxième électrode (23b), au moins l'un des plateaux étant muni d'un média filtrant (24),
une alimentation (11) en un fluide de purge (11a), le fluide de purge (11a) comprenant un gaz,
dans lequel les premier et deuxième plateaux (21a, 21b) définissent une chambre (22) configurée pour recevoir une boue à déshydrater (10a),
dans lequel les première et deuxième électrodes (23a, 23b) sont configurées pour mettre en place un champ électrique au sein de la chambre (22),
dans lequel la chambre (22) est munie d'au moins un orifice d'évacuation (32, 34), prévu dans le tiers inférieur de la chambre (22), configuré pour évacuer un filtrat (15a, 16a), et
dans lequel la chambre (22) est munie d'au moins un orifice d'injection (33), prévu dans le tiers supérieur de la chambre (22), connecté à l'alimentation (11) en fluide de purge (11a) pour injecter dans la chambre (22) le fluide de purge sous pression (11a) afin de refouler le filtrat (15a, 16a) ainsi que les éventuels gaz produits vers le bas de la chambre (22) et donc vers ledit au moins un orifice d'évacuation (32, 34).

2. Dispositif selon la revendication 1, dans lequel chaque plateau (21a, 21b) est muni d'au moins un orifice d'évacuation (32, 34), et
dans lequel chaque plateau (21a, 21b) est muni d'au moins un orifice d'injection (33, 35).

3. Dispositif selon la revendication 2, dans lequel ledit au moins un orifice d'évacuation (32) du premier plateau (21a) et ledit au moins un orifice d'évacuation (34) du deuxième plateau (21b) sont connectés à des canaux d'évacuation différents du dispositif de déshydratation de boues, et
dans lequel ledit au moins un orifice d'injection (33) du premier plateau (21a) et ledit au moins un orifice d'injection (35) du deuxième plateau (21b) sont connectés à des canaux d'injection différents du dispositif de déshydratation de boues.

4. Dispositif selon la revendication 2 ou 3, dans lequel ledit au moins un orifice d'injection (33) du premier plateau (21a) et ledit au moins un orifice d'injection (35) du deuxième plateau (21b) sont configurés pour injecter dans la chambre (22) deux fluides de purge différents (11a, 12a).

5. Dispositif selon l'une quelconque des revendications 1 à 4, dans lequel un fluide de purge (11a) est un gaz ou un mélange de gaz inerte(s) et/ou non toxique(s), non inflammable(s) et non susceptible(s) de créer une zone explosive en présence de H₂ ou de O₂, choisi notamment parmi les gaz suivants : N₂, He, Ar, CO₂, air ou un mélange de ces derniers.

6. Dispositif selon l'une quelconque des revendications 1 à 5, dans lequel un fluide de purge (11a) est humidifié.

7. Dispositif selon l'une quelconque des revendications 1 à 6, dans lequel un fluide de purge (11a) comprend au moins un électrolyte, choisi notamment parmi les espèces suivantes : NaCl, KCl, Na₂SO₄ ou K₂SO₄.

8. Dispositif selon la revendication 7, dans lequel un fluide de purge (11a) comprend au moins un électrolyte comprenant un composé contenant l'élément chlore.

9. Dispositif selon l'une quelconque des revendications 1 à 8, dans lequel un fluide de purge (11a) est dépourvu de sulfate.

10. Dispositif selon l'une quelconque des revendications 1 à 9, dans lequel un fluide de purge (11a) comprend au moins un acide, notamment HCl.

11. Dispositif selon l'une quelconque des revendications 1 à 10, dans lequel un fluide de purge (11a) comprend au moins une base, notamment NaOH.

12. Dispositif selon l'une quelconque des revendications 1 à 11, comprenant au moins un séparateur liquide/gaz (15) prévu en aval dudit au moins un orifice d'évacuation (32).

13. Dispositif selon la revendication 12, comprenant un dispositif de réinjection configuré pour réinjecter dans la chambre au moins une partie d'au moins un filtrat en tant qu'électrolyte.

## Patentansprüche

1. Vorrichtung zur Entwässerung von Schlämmen, umfassend
mindestens eine erste Platte (21a), die mit einer ersten Elektrode (23a) versehen ist, und
mindestens eine zweite Platte (21b), die mit einer zweiten Elektrode (23b) versehen ist, wobei mindestens eine der Platten mit einem Filtermedium (24) versehen ist,
eine Zufuhr (11) eines Spülfluids (11a), wobei das Spülfluid (11a) ein Gas umfasst,
wobei die ersten und die zweiten Platten (21a, 21b) eine Kammer (22) definieren, die dazu ausgestaltet ist, einen zu entwässernden Schlamm (10a) aufzunehmen,
wobei die erste und die zweite Elektrode (23a, 23b) dazu ausgestaltet sind, ein elektrisches Feld innerhalb der Kammer (22) aufzubauen,
wobei die Kammer (22) mit mindestens einer Auslassöffnung (32, 34) versehen ist, die in dem unteren Drittel der Kammer (22) vorgesehen und dazu ausgestaltet ist, ein Filtrat (15a, 16a) auszulassen, und
wobei die Kammer (22) mit mindestens einer Einspritzöffnung (33) versehen ist, die in dem oberen Drittel der Kammer (22) vorgesehen und mit der Zufuhr (11) des Spülfluids (11a) verbunden ist, um das Spülfluid unter Druck (11a) in die Kammer (22) einzuspritzen, um das Filtrat (15a, 16a) sowie etwaige erzeugte Gase zu dem Boden der Kammer (22) hin und damit zu der mindestens einen Auslassöffnung (32, 34) hin zu fördern.

2. Vorrichtung nach Anspruch 1, wobei jede Platte (21a, 21b) mit mindestens einer Auslassöffnung (32, 34) versehen ist, und
wobei jede Platte (21a, 21b) mit mindestens einer Einspritzöffnung (33, 35) versehen ist.

3. Vorrichtung nach Anspruch 2, wobei die mindestens eine Auslassöffnung (32) der ersten Platte (21a) und die mindestens eine Auslassöffnung (34) der zweiten Platte (21b) mit unterschiedlichen Auslasskanälen der Vorrichtung zur Entwässerung von Schlämmen verbunden sind, und
wobei die mindestens eine Einspritzöffnung (33) der ersten Platte (21a) und die mindestens eine Einspritzöffnung (35) der zweiten Platte (21b) mit unterschiedlichen Einspritzkanälen der Vorrichtung zur Entwässerung von Schlämmen verbunden sind.

4. Vorrichtung nach Anspruch 2 oder 3, wobei die mindestens eine Einspritzöffnung (33) der ersten Platte (21a) und die mindestens eine Einspritzöffnung (35) der zweiten Platte (21b) dazu ausgestaltet sind, zwei unterschiedliche Spülfluide (11a, 12a) in die Kammer (22) einzuspritzen.

5. Vorrichtung nach einem der Ansprüche 1 bis 4, wobei ein Spülfluid (11a) ein Gas oder eine Gasmischung ist, das/die inert und/oder ungiftig, nicht brennbar und nicht dafür anfällig ist, einen explosiven Bereich in Gegenwart von H₂ oder O₂ zu erzeugen, insbesondere ausgewählt aus den folgenden Gasen: N₂, He, Ar, CO₂, Luft oder einer Mischung der letzteren.

6. Vorrichtung nach einem der Ansprüche 1 bis 5, wobei ein Spülfluid (11a) angefeuchtet ist.

7. Vorrichtung nach einem der Ansprüche 1 bis 6, wobei ein Spülfluid (11a) mindestens einen Elektrolyten umfasst, insbesondere ausgewählt aus den folgenden Arten: NaCl, KCl, Na₂SO₄ oder K₂SO₄.

8. Vorrichtung nach Anspruch 7, wobei ein Spülfluid (11a) mindestens einen Elektrolyten umfasst, der eine Verbindung umfasst, die das Element Chlor enthält.

9. Vorrichtung nach einem der Ansprüche 1 bis 8, wobei ein Spülfluid (11a) frei von Sulfat ist.

10. Vorrichtung nach einem der Ansprüche 1 bis 9, wobei ein Spülfluid (11a) mindestens eine Säure umfasst, insbesondere HCl.

11. Vorrichtung nach einem der Ansprüche 1 bis 10, wobei ein Spülfluid (11a) mindestens eine Base umfasst, insbesondere NaOH.

12. Vorrichtung nach einem der Ansprüche 1 bis 11, umfassend mindestens einen Flüssigkeits-/Gasabscheider (15), der stromabwärts der mindestens einen Auslassöffnung (32) vorgesehen ist.

13. Vorrichtung nach Anspruch 12, umfassend eine Wiedereinspritzvorrichtung, die dazu ausgestaltet ist, mindestens einen Teil von mindestens einem Filtrat als Elektrolyt wieder in die Kammer einzuspritzen.

## Claims

1. A sludge dewatering device, comprising
at least one first plate (21a) equipped with a first electrode (23a), and
at least one second plate (21b) equipped with a second electrode (23b), at least one of the plates being provided with a filter medium (24),
a supply (11) of a purge fluid (11a), the purge fluid (11a) comprising a gas,
wherein the first and second plates (21a, 21b) define a chamber (22) configured for receiving a sludge to be dewatered (10a),
wherein the first and second electrodes (23a, 23b) are configured for establishing an electric field within the chamber (22),
wherein the chamber (22) is equipped with at least one discharge port (32, 34), provided in the bottom third of the chamber (22), configured for discharging a filtrate (15a, 16a), and
wherein the chamber (22) is equipped with at least one injection port (33), provided in the top third of the chamber (22), connected to the supply (11) of purge fluid (11a) for injecting the pressurized purge fluid (11a) into the chamber (22) in order to discharge the filtrate (15a, 16a) as well as the possible gas produced toward the lower part of the chamber (22) and thus toward said at least one discharge port (32, 34).

2. The device as claimed in claim 1, wherein each plate (21a, 21b) is equipped with at least one discharge port (32, 34), and
wherein each plate (21a, 21b) is equipped with at least one injection port (33, 35).

3. The device as claimed in claim 2, wherein said at least one discharge port (32) of the first plate (21a) and said at least one discharge port (34) of the second plate (21b) are connected to different discharge channels of the sludge dewatering device, and
wherein said at least one injection port (33) of the first plate (21a) and said at least one injection port (35) of the second plate (21b) are connected to different injection channels of the sludge dewatering device.

4. The device as claimed in claim 2 or 3, wherein said at least one injection port (33) of the first plate (21a) and said at least one injection port (35) of the second plate (21b) are configured for injecting two different purge fluids (11a, 12a) into the chamber (22).

5. The device as claimed in any one of claims 1 to 4, wherein a purge fluid (11a) is a gas or a mixture of gases that is/are inert and/or nontoxic, nonflammable and unable to create an explosive zone in the presence of H₂ or O₂, notably selected from the following gases: N₂, He, Ar, CO₂, air or a mixture thereof.

6. The device as claimed in any one of claims 1 to 5, wherein a purge fluid (11a) is moistened.

7. The device as claimed in any one of claims 1 to 6, wherein a purge fluid (11a) comprises at least one electrolyte, notably selected from the following species: NaCl, KCl, Na₂SO₄ or K₂SO₄.

8. The device as claimed in claim 7, wherein a purge fluid (11a) comprises at least one electrolyte comprising a compound containing the element chlorine.

9. The device as claimed in any one of claims 1 to 8, wherein a purge fluid (11a) is sulfate-free.

10. The device as claimed in any one of claims 1 to 9, wherein a purge fluid (11a) comprises at least one acid, notably HCl.

11. The device as claimed in any one of claims 1 to 10, wherein a purge fluid (11a) comprises at least one base, notably NaOH.

12. The device as claimed in any one of claims 1 to 11, comprising at least one liquid/gas separator (15) provided downstream of said at least one discharge port (32).

13. The device as claimed in claim 12, comprising a reinjection device configured for reinjecting at least a portion of at least one filtrate, as electrolyte, into the chamber.
